# EUROPEAN PATENT APPLICATION

(11) **EP 1 795 333 A2**
(43) Date of publication of application: **13.06.2007**
(21) Application number: 06256225.1
(22) Date of filing: 06.12.2006
(51) Int. Cl.: B29D 17/00, G11B 7/26

(54) **Optical disk production method, spin coating apparatus and optical disk production apparatus**

(30) Priority: 09.12.2005 JP 2005355514
(71) Applicant: Ricoh Company, Ltd., Tokyo 143-8555 (JP)
(72) Inventor: Tajima, Yukitoshi, Zama-shi Kanagawa (JP)
(74) Representative: Lamb, Martin John Carstairs

(57) **Abstract**

A disclosed method of producing an optical disk includes the steps of affixing a seal (12) to a disk substrate (10) and thereby closing a circular opening in a center of the disk substrate (10); dribbling a photo-curing resin onto an area (12a) of the seal (12) which area is around a center of the circular opening while rotating the disk substrate (10) at a first rotational speed; forming a film of the photo-curing resin on the disk substrate (10) by rotating the disk substrate at a second rotational speed that is higher than the first rotational speed after the dribbling of the photo-curing resin is completed; and curing the film of the photo-curing resin by irradiating the film of the photo-curing resin with a light without removing the seal (12) from the disk substrate (10).

## Description

### BACKGROUND OF THE INVENTION

### 1. Field of the Invention

The present invention generally relates to an optical disk production method, a spin coating apparatus, and an optical disk production apparatus, and more particularly relates to an optical disk production method including a step of spin-coating an optical disk with a photo-curing resin, a spin coating apparatus for spin-coating an optical disk with a photo-curing resin, and an optical disk production apparatus including the spin coating apparatus.

### 2. Description of the Related Art

In recent years, as the digitization of information has accelerated as seen in the start of digital broadcasting, there started an increasing demand for an optical disk with higher capacity. One way to increase the capacity of an optical disk is to increase the surface density of information by reducing the spot diameter of a laser beam used to record or reproduce information on the optical disk. The spot diameter of a laser beam can be reduced by decreasing the wavelength of the laser beam and increasing the numerical aperture (NA) of the objective lens. Research and development of a next-generation optical disk apparatus, which focuses a laser beam with a wavelength of about 400 nm (hereafter called a blue laser beam) through an objective lens with a numerical aperture of about 0.8 on the recording layer of an optical disk, are very active.

In the case of an optical disk such as a compact disk (CD) or a digital versatile disk (DVD), a laser beam is focused on its recording layer through a disk substrate with a thickness of 0.6 to 1.2 mm. In the case of an optical disk (Blue Ray disk) used for a next-generation optical disk apparatus, a blue laser beam is focused on a recording layer formed on a disk substrate through a 0.1 mm thick transparent protective layer covering the recording layer.

To form the transparent protective layer described above, a spin coating method for spin-coating the surface of a recording layer with a photo-curing resin is often used (for example, see patent document 1). When forming a protective layer with a uniform thickness using a spin coating method, it is preferable to dribble a photo-curing resin onto a rotation center of a disk substrate. In a spin coating method disclosed in patent document 1, a cap, the upper surface of which is curved upward, is fit into a circular opening in the center of a disk substrate held on a turntable to close the circular opening, and a photo-curing resin is dribbled onto the upper surface of the cap. The dribbled photo-curing resin is spread over the surface of the disk substrate by rotating the turntable at a high speed to form a film of the photo-curing resin.

One disadvantage of the above spin coating method is that a high precision positioning device is necessary to dribble a photo-curing resin onto the near center of a disk substrate and, as a result, the costs of an optical disk production apparatus increase. Also, since the upper surface of the cap for closing the opening in the disk substrate has a convex shape, the dribbled photo-curing resin spreads unevenly toward the circumference of the cap before the disk substrate is rotated and, as a result, the photo-curing resin film becomes thicker in the periphery of the disk substrate than in the central area.

[Patent document 1] Japanese Patent Application Publication No. 11-213459

### SUMMARY OF THE INVENTION

The present invention provides an optical disk production method, a spin coating apparatus, and an optical disk production apparatus that substantially obviate one or more problems caused by the limitations and disadvantages of the related art.

An embodiment of the present invention provides an optical disk production method that enables producing an optical disk on the surface of which a protective layer with a uniform thickness is formed.

Another embodiment of the present invention provides a spin coating apparatus that can accurately form a photo-curing resin film with a uniform thickness on a disk substrate.

Still another embodiment of the present invention provides an optical disk production apparatus that can produce an optical disk on the surface of which a protective layer with a uniform thickness is formed.

According to an embodiment of the present invention, a method of producing an optical disk includes the steps of affixing a seal to a disk substrate and thereby closing a circular opening in a center of the disk substrate; dribbling a photo-curing resin onto an area of the seal which area is around a center of the circular opening while rotating the disk substrate at a first rotational speed; forming a film of the photo-curing resin on the disk substrate by rotating the disk substrate at a second rotational speed that is higher than the first rotational speed after the dribbling of the photo-curing resin is completed; and curing the film of the photo-curing resin by irradiating the film of the photo-curing resin with a light without removing the seal from the disk substrate.

According to an embodiment of the present invention, a method of producing an optical disk includes the steps of closing a circular opening in a center of a disk substrate with a closing part having a concavity in a center thereof; dribbling a photo-curing resin into the concavity of the closing part; forming a film of the photo-curing resin on the disk substrate by rotating the disk substrate at a specified rotational speed after the dribbling of the photo-curing resin is completed; and curing the film of the photo-curing resin by irradiating the film of the photo-curing resin with a light.

According to an embodiment of the present invention, a method of producing an optical disk includes a first step of affixing a closing part to a disk substrate and thereby closing a circular opening in a center of the disk substrate; a second step of forming a first film of a photo-curing resin on the disk substrate by spin coating; a third step of curing the first film of the photo-curing resin by irradiating the first film with a light without removing the closing part from the disk substrate; a fourth step of forming a second film of the photo-curing resin over the first film; and a fifth step of curing the second film of the photo-curing resin by irradiating the second film with the light without removing the closing part from the disk substrate.

An embodiment of the present invention provides an apparatus for forming a film of a photo-curing resin on a surface of a disk substrate having a circular opening in a center thereof by rotating the disk substrate, which apparatus includes a rotating table configured to hold the disk substrate rotatably around an axis that is perpendicular to the surface of the disk substrate; a seal affixing unit configured to affix a seal to the disk substrate held on the rotating table to close the circular opening; a substrate suction unit configured to take suction on the disk substrate and thereby to fix the disk substrate to the rotating table; and a resin supplying unit configured to dribble the photo-curing resin onto an area of the seal which area is around a center of the circular opening.

An embodiment of the present invention provides an optical disk production apparatus for producing an optical disk, which optical disk production apparatus includes the above mentioned apparatus for forming a film of a photo-curing resin on a surface of a disk substrate; a light irradiation unit configured to irradiate the film of the photo-curing resin formed on the surface of the disk substrate and thereby to form a protective layer on the surface of the disk substrate; and a seal removing unit configured to remove the seal from the disk substrate on which the protective layer has been formed.

### BRIEF DESCRIPTION OF THE DRAWINGS

FIG. 1 is a schematic diagram of an optical disk production apparatus 100 according to a first embodiment of the present invention;
FIG. 2 is a drawing illustrating a disk substrate 10;
FIG. 3A is a plan view of a disk rotating unit 50 and FIG. 3B is a cross-sectional view of the disk rotating unit 50 and the disk substrate 10 held on the disk rotating unit 50;
FIG. 4A is a side view of a carrying arm 80 and the disk substrate 10 held by the carrying arm 80 and FIG. 4B is a drawing illustrating the underside of the carrying arm 80;
FIG. 5 is a side view of a seal supplying arm 90;
FIG. 6A is a drawing used to describe the movement of the seal supplying arm 90 and FIG. 6B is a drawing illustrating a seal 12 affixed to the disk substrate 10;
FIG. 7 is a side view of a resin supplying unit 96;
FIG. 8 is a side view of a carrying arm 82;
FIG. 9 is a side view of a seal removing mechanism 70;
FIG. 10A is a side view of a carrying arm 84 and the disk substrate 10 held by the carrying arm 84 and FIG. 10B is a drawing illustrating the underside of the carrying arm 84;
FIGs. 11A and 11B are drawings used to describe the movement of the carrying arm 84; and
FIG. 12 is a schematic diagram of an optical disk production apparatus 100' according to a second embodiment of the present invention.

### DESCRIPTION OF THE PREFERRED EMBODIMENTS

Preferred embodiments of the present invention are described below with reference to the accompanying drawings.

### <First embodiment>

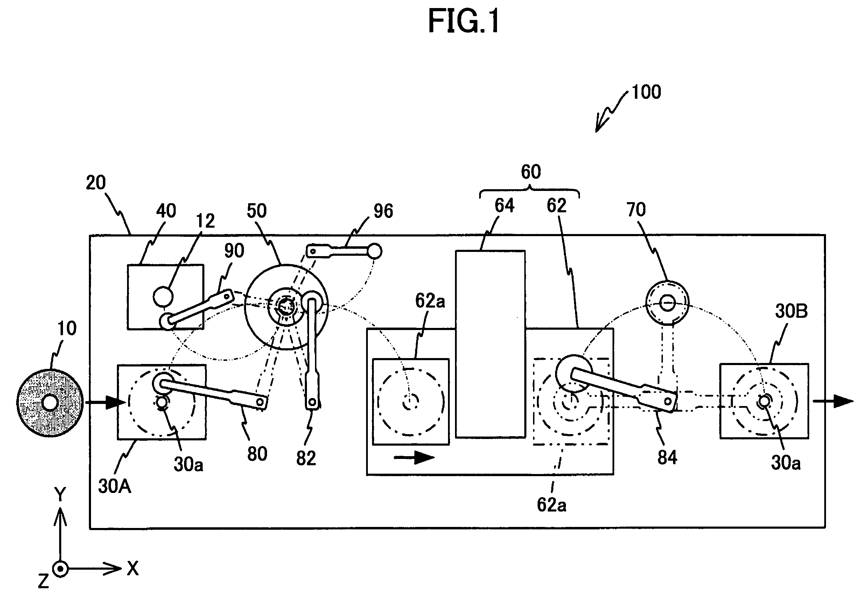

A first embodiment of the present invention is described below with reference to FIGs. 1 through 11B. FIG. 1 is a schematic diagram of an optical disk production apparatus 100 according to the first embodiment of the present invention.

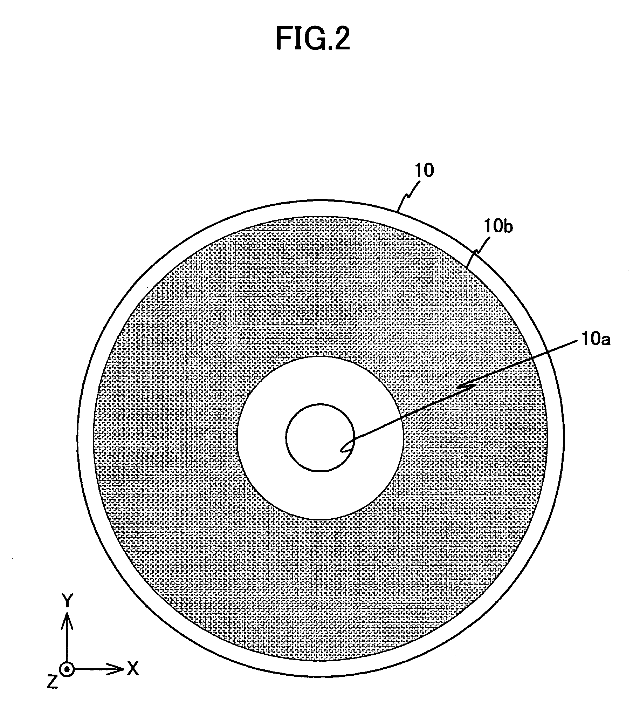

The optical disk production apparatus 100 is an exemplary optical disk production apparatus that produces an optical disk for blue laser recording/reproduction by forming a protective film on a recording layer of a disk substrate 10. The disk substrate 10 is, for example, a circular plate made of polycarbonate and having a diameter of 120 mm and a thickness of 1.1 mm. As shown in FIG. 2, a circular opening 10a is formed in the center of the disk substrate 10 and a recording layer 10b for blue laser recording/reproduction is formed on the upper surface of the disk substrate 10.

As shown in FIG. 1, the optical disk production apparatus 100 includes disk holders 30A and 30B; a seal holder 40; a disk rotating unit 50; a resin supplying unit 96; an ultraviolet irradiation unit 60; a seal removing mechanism 70; carrying arms 80, 82, and 84; a seal supplying arm 90; a base 20 having a planimetric rectangular shape that is long in the X axis direction, on which base 20 the above parts are mounted; and a control unit (not shown) for controlling the above parts.

The disk holder 30A includes a cylindrical pin holder 30a that is long in the Z axis direction and positioned close to the left edge (leftmost position in the X axis direction) on the upper surface of the base 20. Multiple disk substrates 10 conveyed by a conveying unit (not shown) are stacked on the disk holder 30A with the pin holder 30a inserted through the circular openings 10a. A lifter (not shown) is provided below the stacked disk substrates 10. The lifter moves up and down so that the disk substrate 10 on the top of the stacked disk substrates 10 is always positioned at a predetermined height.

The seal holder 40 is positioned downstream of the disk holder 30A in the Y axis direction. The seal holder 40 holds multiple seals 12. Each of the seals 12 is shaped like a circular sheet and is to be affixed onto the disk substrate 10. The seal 12 is a flexible sheet made of, for example, plastic, metal, or paper. An adhesive is applied in advance to the under surface of the seal 12 along its outer edge. The thickness of the seal 12 is equal to or larger than that of an ultraviolet curing resin film described later. The outside diameter of the seal 12 is larger than the diameter of the circular opening 10a of the disk substrate 10 and is smaller than the inside diameter of the recording layer 10b. More specifically, the outside diameter of the seal 12 is preferably between 17 and 23 mm, and the thickness of the seal 12 is preferably equal to or 100 µm larger than that of a protective layer to be formed.

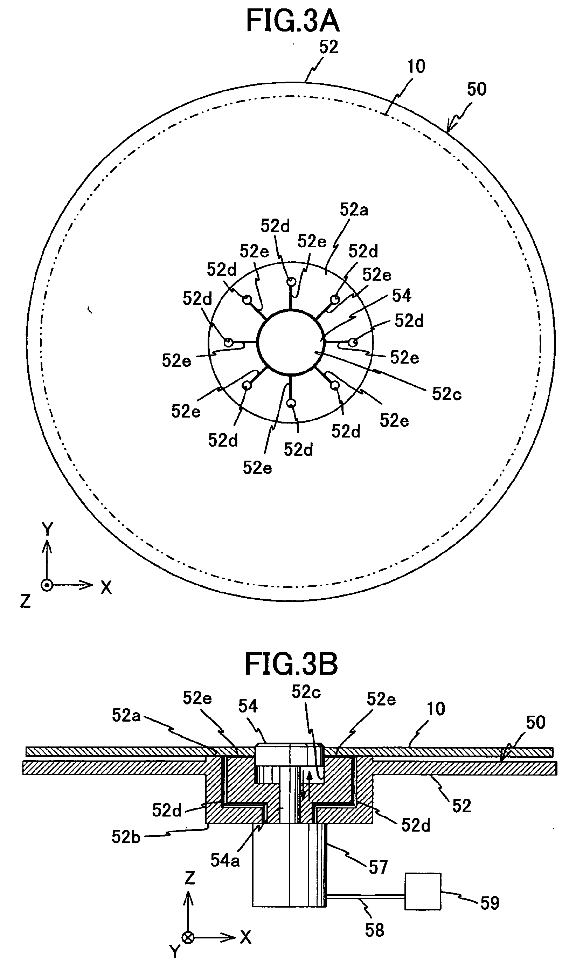

The disk rotating unit 50 is positioned downstream of the seal holder 40 in the X axis direction as shown in FIG. 1. As shown in FIGs. 3A and 3B, the disk rotating unit 50 includes a center table 52, a center boss 54 protruding upward from the center of the center table 52, a rotary joint 57 positioned under the center table 52, and a vacuum pump 59.

The center table 52 is shaped like a circular plate having a circular projection 52a protruding upward from the upper surface of the center table 52 and a circular projection 52b protruding downward from the under surface of the center table 52. A circular recess 52c is formed in the center of the projection 52a, and eight air intake holes 52d leading to the rotary joint 57 are formed around the recess 52c. The top ends of the eight air intake holes 52d and the top end of the recess 52c are connected via eight corresponding guide grooves 52e radiating from the top end of the recess 52c. Also, a rotational axle of the rotary joint 57 is connected to the projection 52b on the under surface of the center table 52.

The rotary joint 57 includes, for example, a rotational axle fixed to the center table 52 used as a rotator and a casing that rotatably holds the rotational axle. Air is supplied to or suctioned from the air intake holes 52d in the center table 52 from/to the outside via the rotary joint 57.

The center boss 54 has a cylindrical shape with a diameter slightly smaller than the inside diameter of the recess 52c and fits into the circular opening 10a of the disk substrate 10. The square edge formed by the upper surface and the side surface of the center boss 54 is beveled to make it easier to insert the center boss 54 into the circular opening 10a of the disk substrate 10. The center boss 54 is inserted downward into the recess 52c of the center table 52. A driving mechanism 54a, which is driven, for example, by a spring and compressed air supplied from the outside, moves the center boss 54 in vertical directions with a certain stroke.

The vacuum pump 59 is connected via an air intake pipe 58 and the rotary joint 57 to the eight air intake holes 52d.

As shown in FIG. 3B, the center boss 54 of the disk rotating unit 50 is inserted into the circular opening 10a of the disk substrate 10 to position and center the disk substrate 10. Also, the projection 52a of the center table 52 supports the disk substrate 10 from beneath. More specifically, the disk substrate 10 is held above the center table 52 with a gap equivalent to the height of the projection 52a between the under surface of the disk substrate 10 and the upper surface of the center table 52. The vacuum pump 59 evacuates the air in the eight air intake holes 52d and thereby holds the disk substrate 10 on the center table 52.

When the disk substrate 10 is not placed on the center table 52, the center boss 54 of the disk rotating unit 50 protrudes from the upper surface of the center table 52. When the disk substrate 10 is placed on the center table 52, the center boss 54 retracts into the recess 52c and the resulting vacuum holds the disk substrate 10 on the center table 52. The center table 52 holding the disk substrate 10 is rotated at a low speed of, for example, 20 rpm to 120 rpm by a rotating mechanism (not shown) while a resin supplying unit 96 described later dribbles an ultraviolet curing resin. After a predetermined amount of the ultraviolet curing resin is dribbled, the center table 52 is rotated at a high speed for a specific period of time to form an ultraviolet curing resin film on the upper surface of the disk substrate 10 (this process is hereafter called spin coating). The speed (rpm) and duration of the high speed rotation of the center table 52 are determined depending on the viscosity of the ultraviolet curing resin and the thickness of the ultraviolet curing resin film to be formed.

The carrying arm 80 shown in FIG. 1 is, for example, a robot arm for carrying the disk substrates 10 stacked on the disk holder 30A to the disk rotating unit 50. The carrying arm 80 is positioned downstream of the disk holder 30A in the X axis direction and upstream of the disk rotating unit 50 in the Y axis direction.

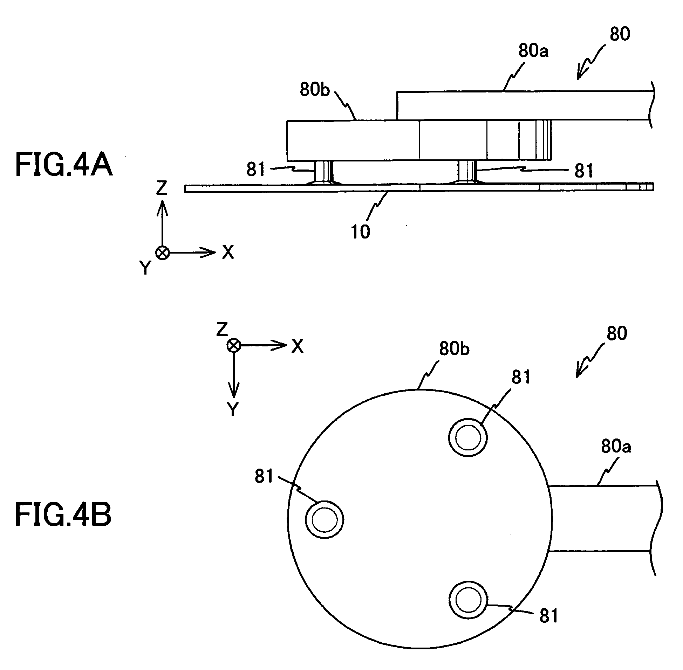

FIG. 4A is a side view of the carrying arm 80 and the disk substrate 10 held by the carrying arm 80, and FIG. 4B is a drawing illustrating the underside of the carrying arm 80. As shown in FIGs. 4A and 4B, the carrying arm 80 includes a swing arm 80a one end of which is connected to a driving mechanism (not shown); a pickup 80b shaped like a circular plate and attached to the other end of the swing arm 80a; and three cylindrical holding parts 81 made of silicon rubber. Suction parts shaped like suction cups are formed at the lower ends of the holding parts 81.

The three holding parts 81 are arranged on the under surface of the pickup 80b along its outer edge at 120 degree intervals. The upper ends of the holding parts 81 are fixed to the under surface of the pickup 80b. Also, the upper end of a hole formed through each of the holding parts 81 is connected via an air intake path in the pickup 80b to a suction mechanism (not shown). The suction mechanism evacuates the air in the holes of the holding parts 81 and, as a result, the disk substrate 10 is held by the holding parts 81. When the suction mechanism stops suctioning the air, the disk substrate 10 is released.

The swing arm 80a of the carrying arm 80 moves horizontally and vertically so that the suction parts of the holding parts 81 on the pickup 80b are brought into contact with the upper surface of the topmost one of the disk substrates 10 stacked on the disk holder 30A. The carrying arm 80 thereby holds the disk substrate 10 and places the disk substrate 10 on the projection 52a of the center table 52 as shown in FIG. 3B.

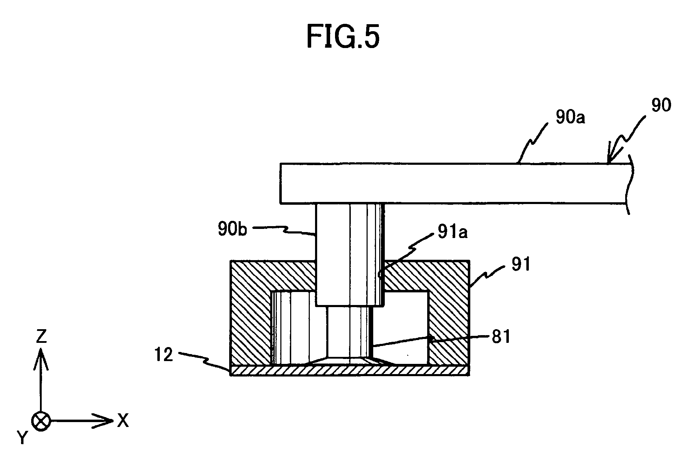

The seal supplying arm 90 shown in FIG. 1 is, for example, a robot arm that affixes the seal 12 held in the seal holder 40 to the disk substrate 10 held on the center table 52 of the disk rotating unit 50 and thereby closes the circular opening 10a of the disk substrate 10. The seal supplying arm 90 is positioned between the seal holder 40 and the disk rotating unit 50. FIG. 5 is a side view of the seal supplying arm 90 and the seal 12 held by the seal supplying arm 90. As shown in FIG. 5, the seal supplying arm 90 includes a swing arm 90a one end of which is connected to a driving mechanism (not shown), a cylindrical part 90b attached to the underside of the other end of the swing arm 90a, a guide 91 fixed to the cylindrical part 90b, and a holding part 81 fixed to the bottom of the cylindrical part 90b. A suction part shaped like a suction cup is formed at the lower end of the holding part 81.

The upper end of the holding part 81 is fixed to the bottom of the cylindrical part 90b; and the upper end of a hole formed through the holding part 81 is connected via an air intake path in the swing arm 90a to a suction mechanism (not shown).

The guide 91 is made up of a circular upper wall and a cylindrical side wall attached to the periphery of the under surface of the upper wall. A circular hole 91a is formed through the upper wall. The cylindrical part 90b is inserted downward into the circular hole 91a and the guide 91 is fixed to the cylindrical part 90b so that the lower end of the side wall is positioned at approximately the same height as the suction part of the holding part 81.

As shown in FIG. 5, the lower end of the guide 91 of the seal supplying arm 90 is brought into contact with the periphery of the upper surface of the seal 12 in the seal holder 40. The holding part 81 takes suction on the center portion of the upper surface of the seal 12 and thereby holds the seal 12. The swing arm 90a of the seal supplying arm 90 moves horizontally and vertically so that the periphery of the under surface of the seal 12 is pressed against the area surrounding the circular opening 10a of the disk substrate 10 and thereby affixes the seal 12 to the upper surface of the disk substrate 10. After affixing the seal 12, the seal supplying arm 90 releases the seal 12 and moves away from the area above the disk substrate 10.

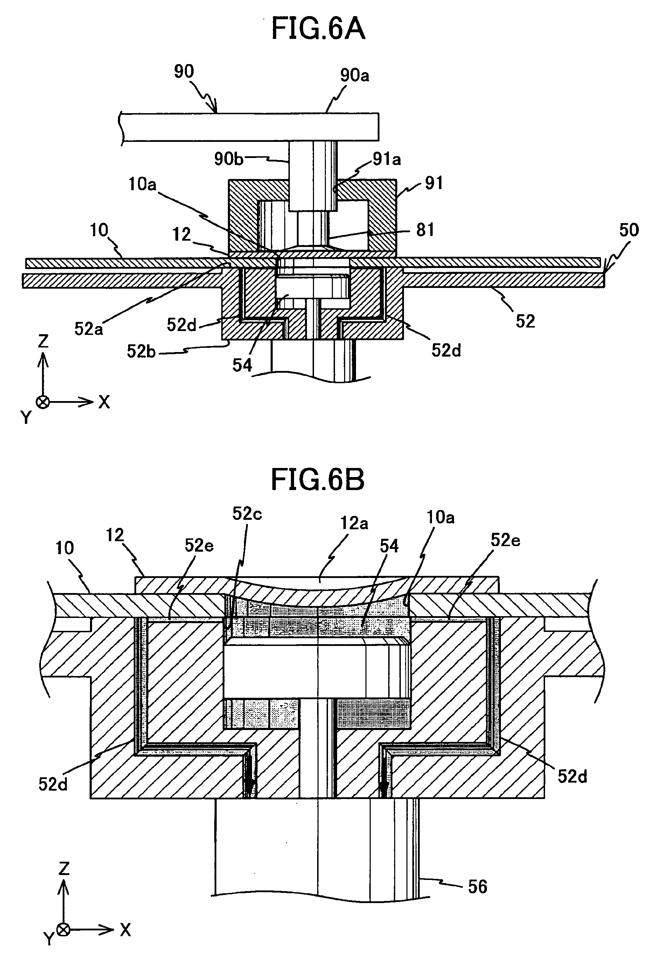

FIG. 6B is a drawing illustrating the seal 12 affixed to the disk substrate 10. As shown in FIG. 6B, when the seal 12 is affixed to the disk substrate 10, the under surface of the seal 12, the circular opening 10a of the disk substrate 10, and the recess 52c in the center table 52 form an internal space (hereafter, just called an internal space). The air in the internal space is suctioned via the guide grooves 52e and the air intake holes 52d by the vacuum pump 59 as indicated by arrows in FIG. 6B. As a result, a negative pressure is developed in the internal space and the negative pressure causes the center portion of the seal 12 to curve downward. In other words, the upper surface of the curved center portion of the seal 12 forms a concavity 12a.

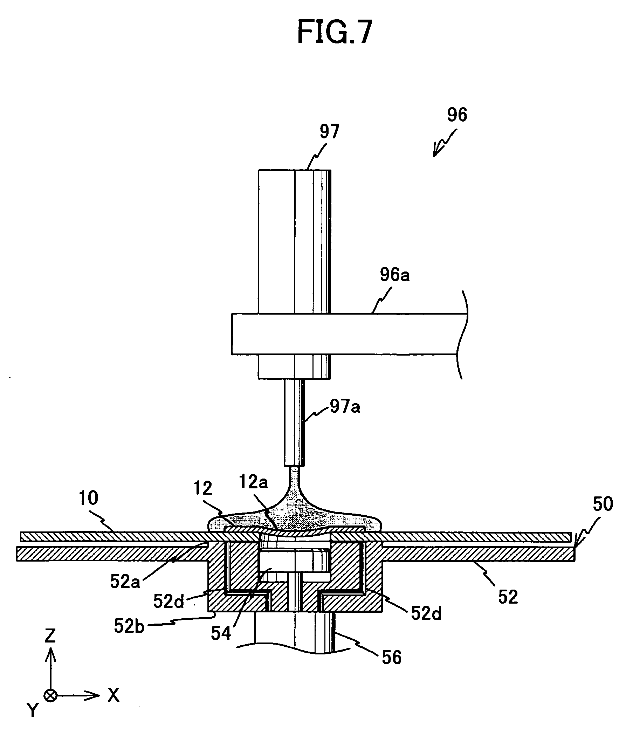

The resin supplying unit 96 shown in FIG. 1 is positioned downstream of the disk rotating unit 50 in the X axis direction. As shown in FIG. 7, the resin supplying unit 96 includes an arm 96a one end of which is connected to a driving mechanism (not shown) and a dispenser 97 supported by the arm 96a.

When the seal 12 is affixed to the disk substrate 10 held on the disk rotating unit 50, the arm 96a of the resin supplying unit 96 moves horizontally and downward so that a nozzle 97a of the dispenser 97 is positioned above the center of the disk substrate 10 as shown in FIG. 7.

Then, a specified amount of an ultraviolet curing resin is dribbled into the concavity 12a of the seal 12 affixed to the disk substrate 10 being rotated at a low speed by the disk rotating unit 50. After the dribbling of the ultraviolet curing resin is completed, the disk substrate 10 is rotated at a high speed by the disk rotating unit 50. As a result, the upper surface of the disk substrate 10 is coated with the ultraviolet curing resin.

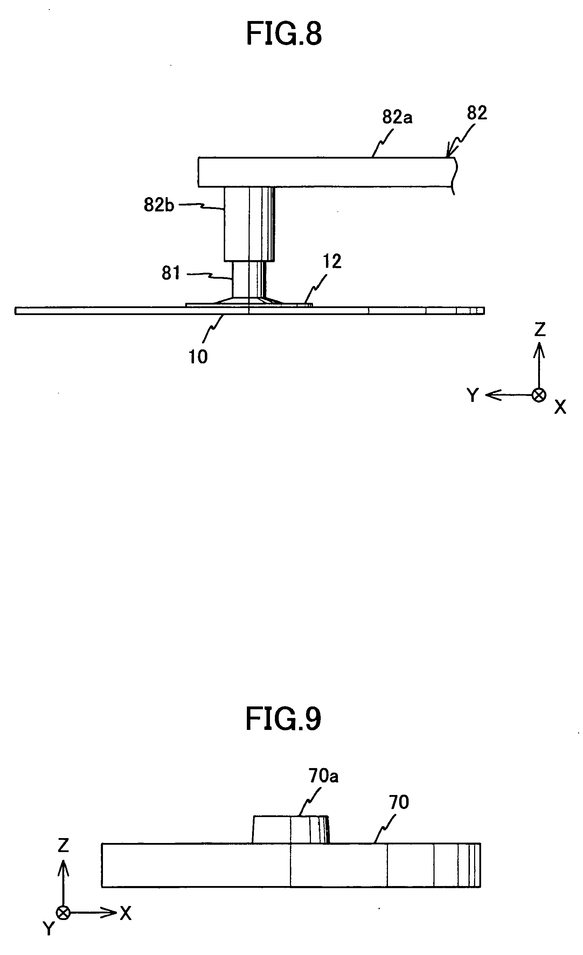

The carrying arm 82 shown in FIG. 1 is, for example, a robot arm that carries the coated disk substrate 10 from the disk rotating unit 50 to the ultraviolet irradiation unit 60. The carrying arm 82 is positioned downstream of the carrying arm 80 in the X axis direction. FIG. 8 is a side view of the carrying arm 82 and the disk substrate 10 held by the carrying arm 82. As shown in FIG. 8, the carrying arm 82 includes a swing arm 82 one end of which is connected to a driving mechanism (not shown), a cylindrical part 82b attached to the underside of the other end of the swing arm 82a, and a holding part 81 fixed to the bottom of the cylindrical part 82b of the swing arm 82a. A suction part shaped like a suction cup is formed at the lower end of the holding part 81.

The upper end of the holding part 81 is fixed to the bottom of the cylindrical part 82b; and the upper end of a hole formed through the holding part 81 is connected via an air intake path in the swing arm 82a to a suction mechanism (not shown).

The swing arm 82a of the carrying arm 82 moves horizontally and vertically so that the suction part of the holding part 81 is brought into contact with the upper surface of the seal 12 affixed to the disk substrate 10 held on the disk rotating unit 50. The carrying arm 82 thereby holds the disk substrate 10 via the seal 12 as shown in FIG. 8. Then, the swing arm 82a moves horizontally and vertically to carry the disk substrate 10 to the ultraviolet irradiation unit 60.

The ultraviolet irradiation unit 60 shown in FIG. 1 is positioned downstream of the carrying arm 82 in the X axis direction. The ultraviolet irradiation unit 60 includes a conveying unit 62 including a stage 62a that moves linearly in the X axis direction from an upstream position shown by solid lines to a downstream position shown by dashed double-dotted lines; and a UV irradiation device 64 positioned above the conveying unit 62.

As shown in FIG. 1, the conveying unit 62 positions the stage 62a at a standby position (the upstream position shown in FIG. 1 by solid lines). When the disk substrate 10 is placed on the stage 62a by the carrying arm 82, the conveying unit 62 moves the stage 62a or conveys the disk substrate 10 in the X axis direction through the space under the UV irradiation device 64 to the downstream position (shown in FIG. 1 by dashed double-dotted lines). When the stage 62a comes directly under the UV irradiation device 64, the UV irradiation device 64 irradiates the disk substrate 10 on the stage 62a with ultraviolet rays and thereby cures the ultraviolet curing resin coating the upper surface of the disk substrate 10.

The seal removing mechanism 70 shown in FIG. 1 is positioned downstream of the ultraviolet irradiation unit 60 in the X axis direction and close to the upper edge (uppermost position in the Y axis direction) on the upper surface of the base 20. As shown in FIG. 9, the seal removing mechanism 70 has a projection 70a in the center which projection 70a is to be inserted into the circular opening 10a of the disk substrate 10.

The disk holder 30B shown in FIG. 1 has substantially the same structure as that of the disk holder 30A and is positioned close to the right edge (rightmost position in the X axis direction) on the upper surface of the base 20.

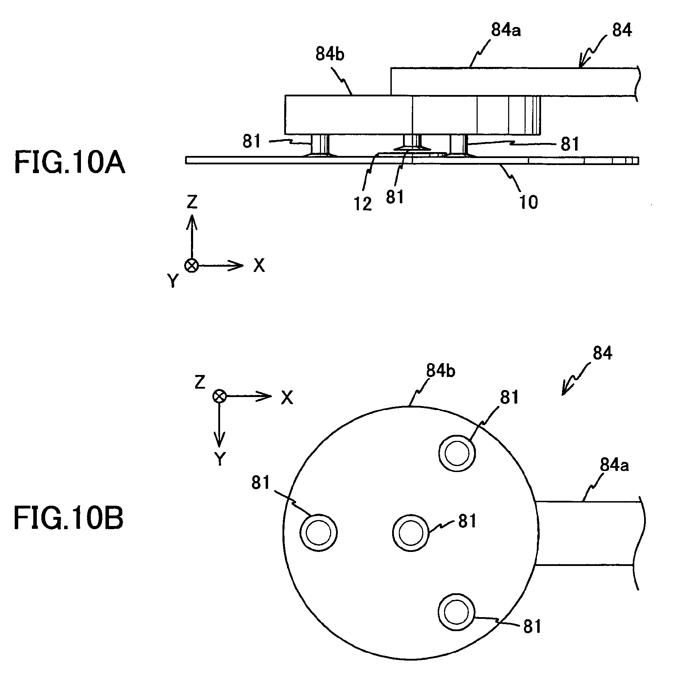

The carrying arm 84 is, for example, a robot arm for carrying the disk substrate 10 from the ultraviolet irradiation unit 60, via the seal removing mechanism 70, to the disk holder 30B. The carrying arm 84 is positioned upstream of the seal removing mechanism 70 in the Y axis direction, between the ultraviolet irradiation unit 60 and the disk holder 30B. FIG. 10A is a side view of the carrying arm 84 and the disk substrate 10 held by the carrying arm 84, and FIG. 10B is a drawing illustrating the underside of the carrying arm 84. As shown in FIGs. 10A and 10B, the carrying arm 84 includes a swing arm 84a one end of which is connected to a driving mechanism (not shown); a pickup 84b shaped like a circular plate and attached to the other end of the swing arm 84a; and four cylindrical holding parts 81 made of silicon rubber. Suction parts shaped like suction cups are formed at the lower ends of the holding parts 81.

Three of the four holding parts 81 are arranged on the under surface of the pickup 84b along its outer edge at 120 degree intervals (hereafter called the three outer edge holding parts 81). The other one of the four holding parts 81 is positioned at the center of the under surface of the pickup 84b (hereafter called the center holding part 81). The suction part of the center holding part 81 is positioned at a height greater than the heights of the suction parts of the three outer edge holding parts 81 (closer to the under surface of the pickup 84b). The upper ends of the holding parts 81 are fixed to the under surface of the pickup 84b, and the upper end of a hole formed through each of the holding parts 81 is connected via an air intake path in the pickup 84b to a suction mechanism (not shown).

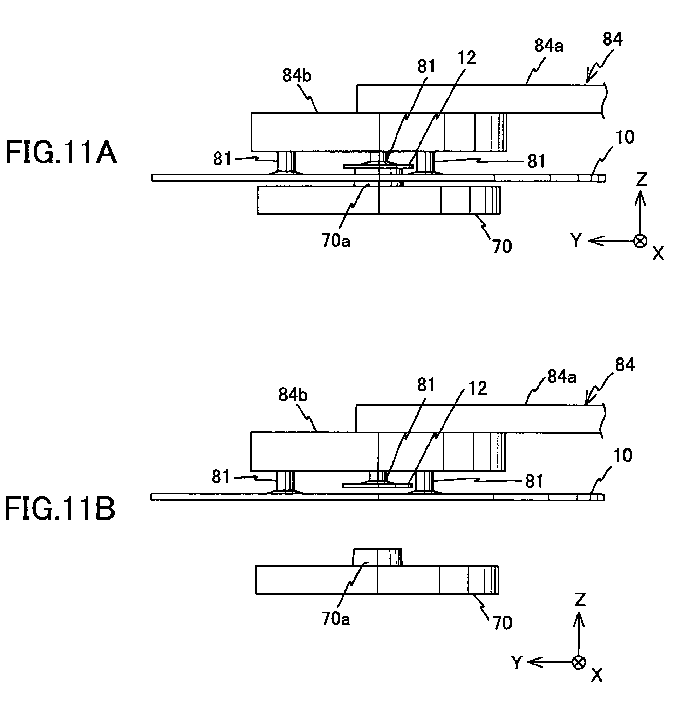

The swing arm 84a of the carrying arm 84 moves horizontally and vertically so that the suction parts of the three outer edge holding parts 81 are brought into contact with the upper surface of the disk substrate 10 on the stage 62a of the ultraviolet irradiation unit 60 which stage 62a is in the downstream position. The carrying arm 84 thereby holds the disk substrate 10 as shown in FIG. 10. Then, the carrying arm 84 carries the disk substrate 10 to a position above the seal removing mechanism 70 and lowers the disk substrate 10 so that the projection 70a of the seal removing mechanism 70 is inserted into the circular opening 10a as shown in FIG. 11A. As a result, the seal 12 is removed from the disk substrate 10 and held by the center holding part 81. Although the seal 12 is flexible, since a film of cured ultraviolet curing resin is formed on the upper surface of the seal 12 in the above spin coating process, the seal 12 can be removed easily from the disk substrate 10 as described above. Then, as shown in FIG. 11B, the swing arm 84a moves upward. At this stage, the disk substrate 10 is held by the three outer edge holding parts 81 and the seal 12 is held by the center holding part 81.

In other words, the disk substrate 10 and the seal 12 are held separately by the carrying arm 84. The disk substrate 10 is carried to the disk holder 30B where the disk substrates 10 are stacked. On the other hand, the seal 12 is discarded into a collection box (not shown).

As described above, the optical disk production apparatus 100 according to the first embodiment of the present invention performs at least a part of an optical disk production method in which an optical disk is produced by forming an ultraviolet curing resin film on the disk substrate 10. In the disk production apparatus 100, when the disk substrate 10 is placed and held on the center table 52 of the disk rotating unit 50, the seal supplying arm 90 affixes the seal 12 to an area surrounding the circular opening 10a of the disk substrate 20 and thereby closes the circular opening 10a. Then, the resin supplying unit 96 dribbles an ultraviolet curing resin into the concavity 12a of the seal 12 curved downward while the disk rotating unit 50 rotates the disk substrate 10 at a low speed. When the dribbling of the ultraviolet curing resin is completed, the disk rotating unit 50 rotates the disk substrate 10 at a high speed and thereby forms an ultraviolet curing resin film on the upper surface of the disk substrate 10. After that, with the seal 12 still affixed to the disk substrate 10, the ultraviolet irradiation unit 60 irradiates the ultraviolet curing resin film on the disk substrate 10 with an ultraviolet ray.

In other words, in the optical disk production apparatus 100 according to the first embodiment of the present invention, the seal 12 is affixed to the disk substrate 10 held on the center table 52 before spin-coating the disk substrate 10. The affixed seal 12 is curved downward by suction to form the concavity 12a on its upper surface. Then, the resin supplying unit 96 dribbles an ultraviolet curing resin into the concavity 12a of the seal 12 affixed to the disk substrate 10 that is being rotated at a low speed. According to this method, since the ultraviolet curing resin is dribbled into the concavity 12a formed by the seal 12 curved downward, the dribbled ultraviolet curing resin can be effectively retained in the center of the disk substrate 12. Also, rotating the disk substrate 12 at a low speed makes it possible to evenly dribble the ultraviolet curing resin into the concavity 12a of the seal 12.

When the dribbling of a specified amount of the ultraviolet curing resin is completed, the disk substrate 10 is rotated at a high speed to form an ultraviolet curing resin film on the upper surface of the disk substrate 10. As described above, the ultraviolet curing resin is retained evenly in the center of the disk substrate 10. Therefore, the ultraviolet curing resin spreads evenly over the upper surface of the disk substrate 10 and thereby forms an ultraviolet curing resin film with a uniform thickness.

In the optical disk production apparatus 100 according to the first embodiment of the present invention, the disk substrate 10 is rotated at a low speed while an ultraviolet curing resin is being dribbled. However, since the concavity 12a is formed on the seal 12, the ultraviolet curing resin may be dribbled without rotating the disk substrate 10. Even when the disk substrate 10 is not rotated, the ultraviolet curing resin dribbled into the concavity 12a of the seal 12 can be retained evenly in the center of the disk substrate 10.

Also, in the optical disk production apparatus 100 according to the first embodiment of the present invention, a concavity is formed in the center of the disk substrate 10 by curving the seal 12 affixed to the disk substrate 10. However, a closing part with a preformed concavity may used instead of the seal 12.

Further, in the optical disk production apparatus 100 according to the first embodiment of the present invention, the center of the disk substrate 10 is closed with the seal 12. Therefore, even when the concavity 12a is not formed, it is possible to efficiently dribble an ultraviolet curing resin onto the center of the disk substrate 10.

### <Second embodiment>

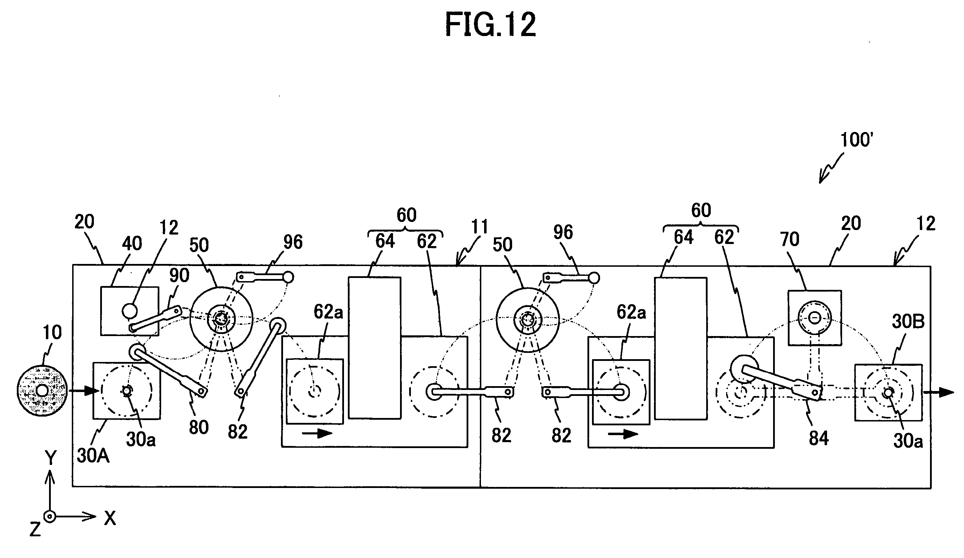

A second embodiment of the present invention is descried below with reference to FIG. 12. In FIG. 12, the same reference numbers are used for parts corresponding to those shown in FIGs. 1 through 11, and descriptions of those parts are omitted or simplified.

FIG. 12 is a schematic diagram of an optical disk production apparatus 100' according to the second embodiment of the present invention. The optical disk production apparatus 100' is an exemplary optical disk production apparatus that forms a normal protective layer on the disk substrate 10 and another protective layer with a higher hardness over the normal protective layer.

As shown in FIG. 12, the optical disk production apparatus 100' includes a first ultraviolet curing resin unit 11 for forming a first protective layer and a second ultraviolet curing resin unit 12 for forming a second protective layer. Hereafter, the first ultraviolet curing resin unit 11 is called a first unit 11 and the second ultraviolet curing resin unit 12 is called a second unit 12 for brevity.

The first unit 11, as shown in FIG. 12, has a similar configuration to that of the optical disk production apparatus 100 except that the first unit 11 does not include the carrying arm 84, the disk holder 30B, and the seal removing mechanism 70.

The second unit 12 is positioned downstream of the first unit 11 in the X axis direction. The second unit 12 has a similar configuration to that of the optical disk production apparatus 100 except that the second unit 12 does not include the disk holder 30A, the seal holder 40, and the seal supplying arm 90.

An exemplary optical disk production method using the above optical disk production apparatus 100' is described below. The disk substrates 10 are conveyed by a conveying unit (not shown) and stacked on the disk holder 30A. Each of the disk substrates 10 is carried by the carrying arm 80 to the disk rotating unit 50 and held on the center table 52. The seal supplying arm 90 affixes the seal 12 to the disk substrate 10 and thereby closes the circular opening 10a. Then, the resin supplying unit 96 dribbles an ultraviolet curing resin into the concavity 12a of the seal 12 affixed to the disk substrate 10, which concavity 12a is formed by causing the seal 12 to curve downward. While the ultraviolet curing resin is being dribbled, the center table 52 of the disk rotating unit 50 rotates at a low speed. When the dribbling of a specified amount of the ultraviolet curing resin is completed, the center table 52 rotates at a high speed. As a result, a first ultraviolet curing resin film is formed on the upper surface of the disk substrate 10. Then, the carrying arm 82 carries the disk substrate 10 to the ultraviolet irradiation unit 60. The ultraviolet irradiation unit 60 irradiates the first ultraviolet curing resin film on the disk substrate 10 with ultraviolet rays, and thereby forms a first protective layer on the upper surface of the disk substrate 10.

When the processing in the first unit 11 is completed, the disk substrate 10 is carried by the carrying arm 82 of the second unit 12 to the disk rotating unit 50 of the second unit 12 and held by suction on the center table 52 of the disk rotating unit 50. Then, the resin supplying unit 96 dribbles an ultraviolet curing resin into the concavity 12a formed by the seal 12 affixed to the disk substrate 10. While the ultraviolet curing resin is being dribbled, the center table 52 of the disk rotating unit 50 rotates at a low speed; and after the dribbling of the ultraviolet curing resin is completed, the center table 52 rotates at a high speed. As a result, a second ultraviolet curing resin film is formed on the upper surface of the disk substrate 10. Next, the carrying arm 82 carries the disk substrate 10 to the ultraviolet irradiation unit 60. The ultraviolet irradiation unit 60 cures the ultraviolet curing resin film on the disk substrate 10 and thereby forms a second protective layer on the upper surface of the disk substrate 10. The carrying arm 84 carries the disk substrate 10 on which the second protective layer is formed to the seal removing mechanism 70 and thereby removes the seal 12, and then carries the disk substrate 10 to the disk holder 30B where disk substrates 10 are stacked.

As described above, the optical disk production apparatus 100' according to the second embodiment of the present invention performs at least a part of an optical disk production method in which an optical disk is produced by forming first and second protective layers made of an ultraviolet curing resin on the disk substrate 10. In other words, in the optical disk production apparatus 100', the first unit 11 forms a first ultraviolet curing resin film on the upper surface of the disk substrate 10 by spin coating; and the second unit 12 forms a second ultraviolet curing resin film on the upper surface of the disk substrate 10 by spin coating.

As described above, in an optical disk production method according to the second embodiment of the present invention, the first unit 11 closes the circular opening 10a by affixing the seal 12 to the disk substrate 10, forms a first ultraviolet curing resin film on the disk substrate 10 by spin coating, cures the first ultraviolet curing resin film by ultraviolet irradiation, and thereby forms a first protective layer. Then, the second unit 12 forms a second ultraviolet curing resin film by spin coating, cures the second ultraviolet curing resin film by ultraviolet irradiation, and thereby forms a second protective layer. In other words, an optical disk production method according to the second embodiment of the present invention makes it possible to coat the disk substrate 10 with multiple protective layers by forming a first protective layer over the recording layer 10b of the disk substrate 10 and a second protective layer with a higher hardness over the first protective layer.

Also, in an optical disk production method according to the second embodiment of the present invention, the circular opening 10a in the disk substrate 10 is closed in advance by affixing the seal 12. This eliminates the need to close the circular opening 10a in the disk substrate 10 before each of the spin coating steps of forming the first and second protective layers. In other words, an optical disk production method according to the second embodiment of the present invention makes it possible to form a second ultraviolet curing resin film with a uniform thickness and thereby makes it possible to form a protective layer with a uniform thickness on a surface of a disk substrate.

According to the second embodiment of the present invention, each of the first unit 11 and the second unit 12 of the optical disk production apparatus 100' includes the disk rotating unit 50. However, the configuration of the optical disk production apparatus 100' is not limited to the above described configuration. For example, the first unit 11 may include a movable ultraviolet irradiation unit. In this case, the first unit 11 forms multiple protective layers on the disk substrate 10 held by suction on the center table 52 of the disk rotating unit 50 by repeating spin coating and ultraviolet irradiation steps; and the second unit 12 forms a protective layer with a higher hardness on top of the protective layers formed by the first unit 11. An optical disk production apparatus with such a configuration makes it possible to form layers of thin films with a uniform thickness using an ultraviolet curing resin with a low viscosity, and thereby makes it possible to form a protective layer with a desired thickness by changing the number of layers of thin films.

Also, the optical disk production apparatus 100' according to the second embodiment of the present invention forms two protective layers on the disk substrate 10: a first protective layer formed by the first unit 11 and a second protective layer formed by the second unit 12. However, the optical disk production apparatus 100' may be configured to form three protective layers using first, second, and third units. Such an optical disk production apparatus makes it possible to form layers of thin films with a uniform thickness by rotating a disk substrate for a longer period of time during spin coating, and thereby makes it possible to form a protective layer with a desired thickness.

The present invention is not limited to the optical disk production apparatuses 100 and 100' described in the above embodiments.

In the above embodiments, the disk substrate 10 on which the recording layer 10b for blue laser recording/reproduction is formed is used as an example. However, the optical disk production apparatus 100 and 100' may be used to form a protective layer on a disk substrate for a CD, CD-R, CD-RW, or DVD or on any flat circular object.

Also, in the above embodiments, an ultraviolet curing resin is used as the material of a protective layer to be formed on the disk substrate 10. However, any other photo-curing resin such as an infrared radiation curing resin, an electromagnetic radiation curing resin, or an X-ray curing resin may be used.

According to embodiments of the present invention, a circular opening in the center of a disk substrate is closed with a seal and a photo-curing resin is dribbled onto an area of the seal which area is around the center of the disk substrate. This makes it possible to spread the photo-curing resin evenly over the surface of the disk substrate by rotating the disk substrate. Also, since the seal is affixed to the disk substrate, it is not necessary to remove the seal even when carrying the disk substrate from a spin-coating apparatus to a light irradiation apparatus. This means that even when the disk substrate is carried between a spin-coating apparatus and a light irradiation apparatus many times to form multiple layers of photo-curing resin films, the step of closing the circular opening of the disk substrate is performed only once. Therefore, embodiments of the present invention improve the efficiency of optical disk production.

As described above, an optical disk production method according to an embodiment of the present invention is suitable to produce an optical disk, a spin coating apparatus according to an embodiment of the present invention is suitable to coat a disk with a liquid material, and an optical disk production apparatus according to an embodiment of the present invention is suitable to produce an optical disk.

The present invention is not limited to the specifically disclosed embodiments, and variations and modifications may be made without departing from the scope of the present invention.

## Claims

1. A method of producing an optical disk, **characterized by** comprising the steps of:
affixing a seal to a disk substrate and thereby closing a circular opening in a center of the disk substrate;
dribbling a photo-curing resin onto an area of the seal which area is around a center of the circular opening while rotating the disk substrate at a first rotational speed;
forming a film of the photo-curing resin on the disk substrate by rotating the disk substrate at a second rotational speed that is higher than the first rotational speed after the dribbling of the photo-curing resin is completed; and
curing the film of the photo-curing resin by irradiating the film of the photo-curing resin with a light without removing the seal from the disk substrate.

2. The method of producing an optical disk as claimed in claim 1, wherein
the seal is flexible; and
the method further includes the step of taking suction on an underside of the seal before the dribbling of the photo-curing resin and thereby causing the seal to curve downward and to form a concavity to hold the dribbled photo-curing resin.

3. The method of producing an optical disk as claimed in claim 1, wherein the seal has a concavity in a center thereof which concavity is to hold the dribbled photo-curing resin.

4. The method of producing an optical disk as claimed in any one of claims 1 to 3, wherein a diameter of the seal is smaller than an inside diameter of a recording area formed on the disk substrate.

5. The method of producing an optical disk as claimed in any one of claims 1 to 4, wherein a thickness of the seal is equal to or larger than that of the film of the photo-curing resin.

6. The method of producing an optical disk as claimed in any one of claims 1 to 5, wherein an adhesive is applied to a periphery of an under surface of the seal which periphery is to be brought into contact with an area of the disk substrate which area is around the circular opening.

7. The method of producing an optical disk as claimed in any one of claims 1 to 6, wherein the seal is made of plastic, metal, or paper.

8. A method of producing an optical disk, **characterized by** comprising the steps of:
closing a circular opening in a center of a disk substrate with a closing part having a concavity in a center thereof;
dribbling a photo-curing resin into the concavity of the closing part;
forming a film of the photo-curing resin on the disk substrate by rotating the disk substrate at a specified rotational speed after the dribbling of the photo-curing resin is completed; and
curing the film of the photo-curing resin by irradiating the film of the photo-curing resin with a light.

9. A method of producing an optical disk, **characterized by** comprising:
a first step of affixing a closing part to a disk substrate and thereby closing a circular opening in a center of the disk substrate;
a second step of forming a first film of a photo-curing resin on the disk substrate by spin coating;
a third step of curing the first film of the photo-curing resin by irradiating the first film with a light without removing the closing part from the disk substrate;
a fourth step of forming a second film of the photo-curing resin over the first film; and
a fifth step of curing the second film of the photo-curing resin by irradiating the second film with the light without removing the closing part from the disk substrate.

10. The method of producing an optical disk as claimed in claim 9, wherein the disk substrate is held on a same rotating table during the first through fifth steps.

11. The method of producing an optical disk as claimed in claim 9 or 10, further comprising:
a sixth step of forming one or more films of the photo-curing resin over the second film without removing the closing part from the disk substrate.

12. An apparatus for forming a film of a photo-curing resin on a surface of a disk substrate having a circular opening in a center thereof by rotating the disk substrate, comprising:
a rotating table configured to hold the disk substrate rotatably around an axis that is perpendicular to the surface of the disk substrate;
a seal affixing unit configured to affix a seal to the disk substrate held on the rotating table to close the circular opening;
a substrate suction unit configured to take suction on the disk substrate and thereby to fix the disk substrate to the rotating table; and
a resin supplying unit configured to dribble the photo-curing resin onto an area of the seal which area is around a center of the circular opening.

13. The apparatus as claimed in claim 12, wherein the seal is flexible and curves downward when the disk substrate is suctioned by the substrate suction unit.

14. The apparatus as claimed in claim 12, wherein the seal has a concavity in a center thereof which concavity is to hold the dribbled photo-curing resin.

15. The apparatus as claimed in any one of claims 12 to 14, wherein a diameter of the seal is smaller than an inside diameter of a recording area formed on the disk substrate.

16. The apparatus as claimed in any one of claims 12 to 15, wherein a thickness of the seal is equal to or larger than that of the film of the photo-curing resin.

17. The apparatus as claimed in any one of claims 12 to 16, wherein an adhesive is applied to a periphery of an under surface of the seal which periphery is to be brought into contact with an area of the disk substrate which area is around the circular opening.

18. The apparatus as claimed in any one of claims 12 to 17, wherein the seal is made of plastic, metal, or paper.

19. An optical disk production apparatus for producing an optical disk, **characterized by** comprising:
the apparatus as claimed in any one of claims 12 to 18;
a light irradiation unit configured to irradiate the film of the photo-curing resin formed on the surface of the disk substrate by the apparatus as claimed in any one of claims 12 to 18 and thereby to form a protective layer on the surface of the disk substrate; and
a seal removing unit configured to remove the seal from the disk substrate on which the protective layer has been formed.
